# EUROPÄISCHE PATENTANMELDUNG

(11) **EP 0 636 800 A1**
(43) Veröffentlichungstag der Anmeldung: **01.02.1995**
(21) Anmeldenummer: 94109522.6
(22) Anmeldetag: 21.06.1994
(51) Int. Cl.: F16B 37/04, B62D 27/00

(54) **Kraftfahrzeugrohbau mit Käfigmuttern, die durch Schweissverbindungen gehalten werden**

(30) Priorität: 01.07.1993 DE 4321922
(71) Anmelder: ADAM OPEL AG, D-65423 Rüsselsheim (DE)
(72) Erfinder: Sobing, Dieter, Dipl.-Ing. (FH), D-65428 Rüsselsheim (DE); Otte, Manfred, Dipl.-Ing., D-65396 Walluf (DE); Ripper, Helmut, Dipl.-Ing., D-63110 Rodgau (DE); Bax, Werner, Dipl.-Ing., D-63512 Hainburg (DE)
(74) Vertreter: Bergerin, Ralf, Dipl.-Ing.

(57) **Zusammenfassung**

Eine Käfigmutter (5) besteht aus einem laschenartig geformten Käfig (9), in den von einer Seite her ein Sockel (25) einer Mutter (10) eingeschoben werden kann, die im eingeschobenen Zustand mit einem ein Innengewinde (24) aufweisenden zylindrischen Teil (23) aus dem Käfig (9) ragt. Der Käfig (9) wird vor dem Einschieben der Mutter (10) mit einem Kraftfahrzeugrohbau (1) verschweißt.

## Beschreibung

Die Erfindung betrifft einen Kraftfahrzeugrohbau mit daran durch Schweißverbindungen gehaltenen Muttern zum Befestigen von Teilen.

Üblicherweise werden in einen Kraftfahrzeugrohbau an vielen Stellen Muttern eingeschweißt, in die später zur Befestigung von Teilen des Kraftfahrzeugs Schrauben geschraubt werden. Insbesondere wird meist die Karosserie auf solche Weise mit den Chassis-Teilen des Kraftfahrzeugs verbunden. In der Praxis läßt es sich mit vertretbarem Aufwand nicht vermeiden, daß beim Einschweißen der Muttern Schweißspritzer in das Gewinde der Muttern gelangen. Wenn anschließend der Kraftfahrzeugrohbau lackiert wird, überzieht der Lack zwangsläufig auch das Gewinde der Muttern. Beides führt dazu, daß diese Gewinde vor dem Einschrauben von Befestigungsschrauben nachgeschnitten werden müssen, damit sie von Schweißspritzern und Lack gesäubert werden.

Wie die DE-A-26 17 940 zeigt, sind im Kraftfahrzeugbau auch schon Muttern gebräuchlich, welche in einem mit der Karosserie verbundenen Käfig eingeschoben sind. Der Käfig selbst wird über Karosseriekanten geklipst. Solche Muttern erlauben einen Toleranzausgleich zwischen der Karosserie und dem an ihm zu befestigenden Bauteil, weil sie innerhalb des Käfigs verschoben werden können. Sie sind aufgrund ihrer Bauart bisher jedoch nur dann anwendbar, wenn über die Muttern keine größeren Kräfte übertragen werden müssen, beispielsweise für die Befestigung von Türverkleidungen.

Der Erfindung liegt das Problem zugrunde, einen Kraftfahrzeugrohbau der eingangs genannten Art so auszubilden, daß das jeweilige Gewinde der in ihm anzuordnenden Muttern durch Schweißvorgänge und/oder Lackieren des Kraftfahrzeugrohbaus nicht verschmutzt werden kann.

Dieses Problem wird erfindungsgemäß dadurch gelöst, daß jede Mutter in einem mit dem Kraftfahrzeugrohbau durch die Schweißverbindung befestigten Käfig angeordnet ist und der Käfig eine nach zumindest einer Seite hin offene Mutteraufnahme zum Einschieben der Mutter nach dem Erzeugen der Schweißverbindung hat.

Durch diese erfindungsgemäße Ausbildung des Kraftfahrzeugrohbaus wird es möglich, die Muttern erst nach dem Festschweißen der Käfige und nach dem Lackieren des Kraftfahrzeugrohbaus in die jeweiligen Käfige einzuschieben. Dadurch ist ein Verschmutzen der Gewinde der Muttern durch Schweißperlen oder Lack ausgeschlossen, so daß das bisher häufig erforderliche Nachschneiden von Gewinden unnötig wird. Ein weiterer Vorteil des nachträglichen Einschiebens der Muttern in Käfige liegt darin, daß die Muttern auswechselbar sind. Das ist insbesondere bei Reparaturarbeiten zweckmäßig, wenn sich beispielsweise zeigt, daß das Gewinde beschädigt oder zerstört ist. Diese Möglichkeit des Auswechselns bei der Reparatur verhindert zugleich, daß bei der Reparatur zum Auswechseln von Muttern der Korrosionsschutz des Kraftfahrzeugs verletzt wird. Trotz dieser funktionellen Vorteile erniedrigen sich dank der Erfindung die Herstellungskosten eines Kraftfahrzeuges.

Ein für die Übertragung hoher Kräfte ausreichend langes Gewinde in der Mutter und ein wirksamer Verdrehschutz der Mutter durch den Käfig läßt sich auf sehr einfache Weise dadurch verwirklichen, daß gemäß einer vorteilhaften Weiterbildung der Erfindung die Mutter einen Innengewinde aufweisenden zylindrischen Teil mit einem in den Käfig zwischen parallelen Seitenwänden des Käfigs einschiebbaren flanschartigen Sockel mit zwei gegen die Seitenwände gelangenden, zueinander parallelen Seitenflächen hat und daß der Käfig in einem über die Mutter greifenden, die Seitenwände miteinander verbindenden Wandabschnitt zum Einschieben des zylindrischen Teiles eine zu einer Seite hin offene Einschiebeöffnung aufweist.

Die jeweilige Mutter kann nach dem Einschieben nach allen Seiten hin geringfügig verschoben werden, so daß ein Toleranzausgleich möglich wird, wenn die Einschiebeöffnung einen parallele Begrenzungsflächen aufweisenden Einschiebbereich mit einer dem Durchmesser des zylindrischen Teiles der Mutter entsprechenden Abstand aufweist, welcher in einen kreisförmigen Bereich mündet, der einen etwas größeren Durchmesser hat als der zylindrische Teil der Mutter. Durch einen solchen Toleranzausgleich lassen sich Verspannungen durch die zu befestigenden Teile vermeiden. Weiterhin ist hierdurch die Gefahr einer Zerstörung des Gewindes durch schräg eingeschraubte Befestigungsschrauben wesentlich vermindert.

Ein unbeabsichtigtes Herausfallen der Muttern aus den Käfigen vor dem Befestigen von Teilen läßt sich auf einfache Weise und ohne zusätzlichen Montageaufwand verhindern, wenn der Einschiebebereich unmittelbar vor seiner Einmündung in den kreisförmigen Bereich eine Engstelle aufweist, welche geringfügig enger ist als es dem Durchmesser des zylindrischen Bereiches entspricht.

Der Käfig kann auf übliche Weise durch Punktschweißen mit dem Kraftfahrzeugrohbau verbunden werden, wenn er nach Art einer Lasche an seinen beiden seitenwänden nach außen gerichtete Anschweißflächen hat.

Bei Platzknappheit kann man alternativ zu den Laschen auch vorsehen, daß die Seitenwände des Käfigs an ihrer dem Kraftfahrzeugrohbau zugewandten Kante zum Verschweißen mit dem Kraftfahrzeugrohbau jeweils zwei geringfügig vorspringende Fußstücke haben. Die Käfige werden dann mittels Warzenschweißen an den Kraftfahrzeugrohbau geschweißt.

Die Muttern können auch nach dem Verschließen eines Hohlprofiles in die im Hohlprofil angeordneten Käfige eingesetzt werden, wenn der Käfig innerhalb eines als Hohlprofil ausgebildeten Holmes angeordnet ist und der Holm zum Einschieben der Mutter ein Fenster aufweist.

Die Erfindung läßt zahlreiche Ausführungsformen zu. Zur weiteren Verdeutlichung ihres Grundprinzips sind zwei davon in der Zeichnung dargestellt und werden nachfolgend beschrieben. Diese zeigt in
- Fig.1: eine perspektivische Ansicht eines Endbereiches eines erfindungsgemäßen Kraftfahrzeugrohbaus,
- Fig.2: eine perspektivische Ansicht einer Käfigmutter nach der Erfindung,
- Fig.3: eine Vorderansicht eines Käfigs der Käfigmutter,
- Fig.4: eine Draufsicht auf den Käfig,
- Fig.5: eine Draufsicht auf eine Mutter,
- Fig.6: eine halbseitig geschnittene Seitenansicht der Mutter,
- Fig.7: eine Vorderansicht einer zweiten Ausführungsform eines Käfigs,
- Fig.8: eine Draufsicht auf den Käfig nach Fig.7,
- Fig.9: eine Seitenansicht des Käfigs nach Fig.8.

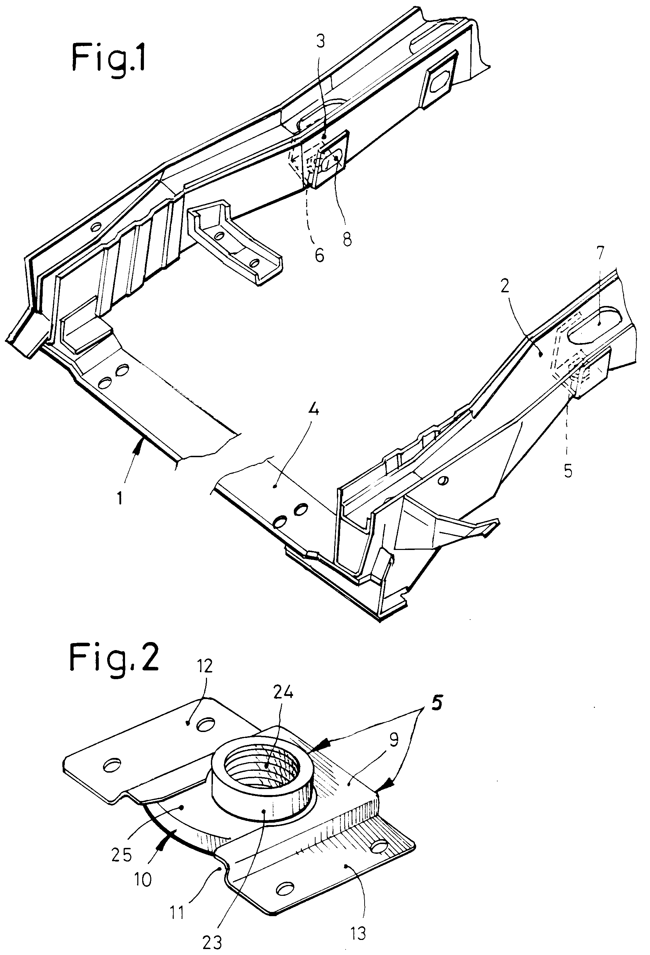

Die Figur 1 zeigt teilweise einen Kraftfahrzeugrohbau 1, von dem zwei als geschlossene Hohlprofile ausgebildete, in Längsrichtung verlaufende Holmen 2, 3 und eine Querverbindung 4 zu sehen ist. In diesen Holmen 2, 3 sind Käfigmuttern 5, 6 angeordnet, in die von unten her zur Befestigung von nicht gezeigten Teilen ebenfalls nicht dargestellte Schrauben eingeschraubt werden können. Fenster 7, 8, welche in der Oberseite der Holme 2, 3, eine ihrer Seitenfläche oder ihrer Unterseite vorgesehen sein können, ermöglichen es, die Käfigmuttern 5, 6 von außen zu erreichen.

In der Figur 2 ist eine Käfigmutter 5 für sich allein und in einem gegenüber Figur 1 vergrößerten Maßstab dargestellt. Sie hat einen Käfig 9, in den in Figur 2 gesehen von der linken Seite her eine Mutter 10 eingeschoben ist. Diese sitzt in der dargestellten, eingeschobenen Position verdrehsicher in einer Mutteraufnahme 11. Zu erkennen ist in Figur 2 weiterhin, daß der Käfig 9 nach Art einer Lasche ausgebildet ist und an seinen beiden Seiten jeweils eine Anschweißfläche 12, 13 hat, mit der er auf den Kraftfahrzeugrohbau geschweißt wird.

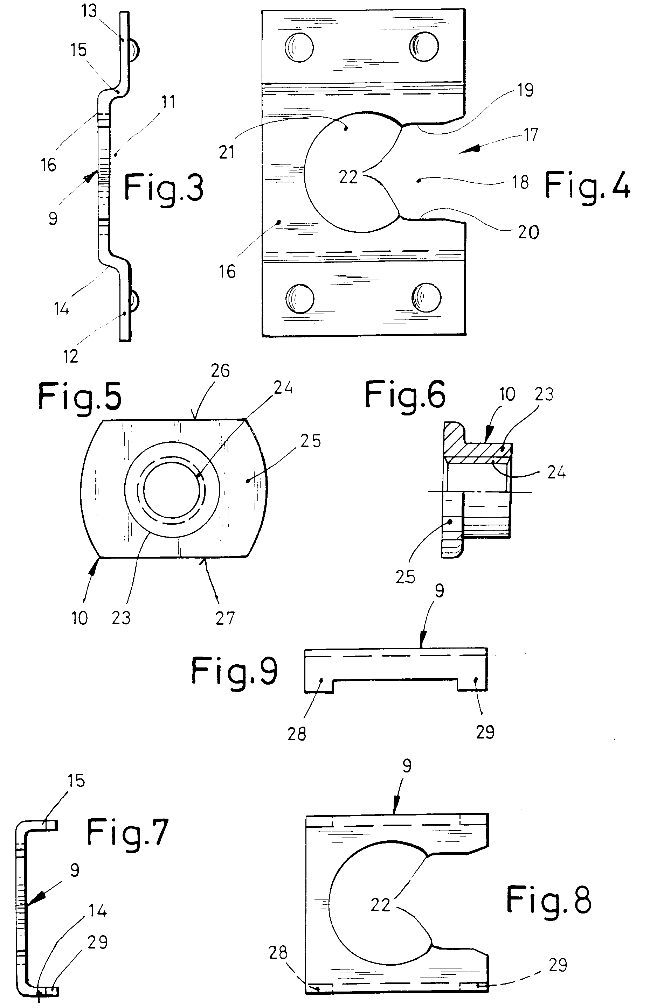

Die Figur 3 verdeutlicht die laschenartige Ausbildung des Käfigs 9. Dieser weist zwei parallel zueinander verlaufende Seitenwände 14, 15 auf, welche durch einen Wandabschnitt 16 miteinander verbunden sind.

In Figur 4 ist zu sehen, daß dieser Wandabschnitt 16 eine nach rechts hin offene Einschiebeöffnung 17 hat, die einen Einschiebebereich 18 mit parallelen Begrenzungsfläche 19, 20 hat, der in einem kreisförmigen Bereich 21 mündet. Die Begrenzungsflächen 19, 20 nähern sich unmittelbar vor der Mündung in den kreisförmigen Bereich 21 einander, so daß eine Engstelle 22 entsteht.

Die Figuren 5 und 6 zeigen, daß die Mutter 10 jeweils aus einem zylindrischen Teil 23 mit durchgehendem Innengewinde 24 und einem flanschartigen Sockel 25 besteht, der an gegenüberliegenden Seiten durch parallele Seitenflächen 26, 27 begrenzt ist. Die Breite des Sockels 25, also der gegenseitige Abstand der Seitenflächen 26, 27, und die Dicke des Sockels 25 sind so bemessen, daß sich der Sockel 25 in die Aufnahme 11 des Käfigs 9 einschieben läßt, wobei die Seitenflächen 26, 27 des Sockels 25 gegen die Seitenwände 14, 15 des Käfigs 9 anliegen und der zylindrische Teil 23 nach dem Durchschieben durch den Einschiebebereich 18 mit allseitigem Spiel in dem kreisförmigen Bereich 21 sitzt.

Die Ausführungsform des Käfigs 9 nach den Figuren 7, 8 und 9 unterscheidet sich von der nach den Figuren 3 und 4 dadurch, daß die Seitenwände 14, 15 keine nach außen gerichteten Anschweißflächen haben. Statt dessen haben die Seitenwände 14, 15 an ihrer unteren Kante jeweils zwei Fußstücke 28, 29, mit denen sie auf dem Kraftfahrzeugrohbau 1 aufstehen, so daß sie dort mit ihm verschweißt werden können.

## Patentansprüche

1. Kraftfahrzeugrohbau mit daran durch Schweißverbindungen gehaltenen Muttern zum Befestigen von Teilen, **dadurch gekennzeichnet**, daß jede Mutter (10) in einem mit dem Kraftfahrzeugrohbau (1) durch die Schweißverbindung befestigten Käfig (9) angeordnet ist und der Käfig (9) eine nach zumindest einer Seite hin offene Mutteraufnahme (11) zum Einschieben der Mutter (10) nach dem Erzeugen der Schweißverbindung hat.

2. Kraftfahrzeugrohbau nach Anspruch 1, **dadurch gekennzeichnet**, daß die Mutter (10) einen Innengewinde (24) aufweisenden zylindrischen Teil (23) mit einem in den Käfig (9) zwischen parallelen Seitenwänden (14, 15) des Käfigs (9) einschiebbaren flanschartigen Sockel (25) mit zwei gegen die Seitenwände (14, 15) gelangenden, zueinander parallelen Seitenflächen (26, 27) hat und daß der Käfig (9) in einem über die Mutter (10) greifenden, die Seitenwände (14, 15) miteinander verbindenden Wandabschnitt (16) zum Einschieben des zylindrischen Teiles (23) eine zu einer Seite hin offene Einschiebeöffnung (17) aufweist.

3. Kraftfahrzeugrohbau nach den Ansprüchen 1 oder 2, **dadurch gekennzeichnet**, daß die Einschiebeöffnung (17) einen konische Begrenzungsflächen (19, 20) aufweisenden Einschiebbereich (18) mit einer dem Durchmesser des zylindrischen Teiles (23) der Mutter (10) entsprechenden Abstand aufweist, welcher in einen kreisförmigen Bereich (21) mündet, der einen etwas größeren Durchmesser hat als der zylindrische Teil (23) der Mutter (10).

4. Kraftfahrzeugrohbau nach zumindest einem der vorangehenden Ansprüche, **dadurch gekennzeichnet**, daß der Einschiebebereich (18) unmittelbar vor seiner Einmündung in den kreisförmigen Bereich (21) eine Engstelle (22) aufweist, welche geringfügig enger ist als es dem Durchmesser des zylindrischen Teiles (23) entspricht.

5. Kraftfahrzeugrohbau nach zumindest einem der vorangehenden Ansprüche, **dadurch gekennzeichnet**, daß der Käfig (9) nach Art einer Lasche an seinen beiden Seitenwänden (14, 15) nach außen gerichtete Anschweißflächen (12, 13) hat.

6. Kraftfahrzeugrohbau nach zumindest einem der vorangehenden Ansprüche, **dadurch gekennzeichnet**, daß die Seitenwände (14, 15) des Käfigs (9) an ihrer dem Kraftfahrzeugrohbau (1) zugewandten Kante zum Verschweißen mit dem Kraftfahrzeugrohbau (1) jeweils zwei geringfügig vorspringende Fußstücke (28, 29) haben.

7. Kraftfahrzeugrohbau nach zumindest einem der vorangehenden Ansprüche, **dadurch gekennzeichnet**, daß der Käfig (9) innerhalb eines als Hohlprofil ausgebildeten Holmes (2, 3) angeordnet ist und der Holm (2, 3) zum Einschieben der Mutter (10) ein Fenster (7, 8) aufweist.
